# EUROPEAN PATENT APPLICATION

(11) **EP 2 793 478 A1**
(43) Date of publication of application: **22.10.2014**
(21) Application number: 13163785.2
(22) Date of filing: 15.04.2013
(51) Int. Cl.: H04N 21/422

(54) **Method for managing multimedia devices within a local environment and system for implementing this method**

(71) Applicant: Nagravision S.A., 1033 Cheseaux-sur-Lausanne (CH)
(72) Inventor: Trudelle, Simon, 1040 Saint-Barthélémy (CH); Stransky, Philippe, 1033 Cheseaux-sur-Lausanne (CH); Huntington, Matthew, Twickenham, Greater London TW1 1NH (GB); Wendling, Bertrand, 01220 Divonne-les-Bains (FR)
(74) Representative: Leman Consulting S.A.

(57) **Abstract**

A method and a system for managing multimedia devices (11) within a local environment, each of them being connected through a specific connection means (L1, L2, L3, L4) to a unifying device (20) in accordance with a specific communication protocol (Prot1, Prot2, Prot3, Prot4) are provided. The unifying device (20) being connected to at least one data source (15), each multimedia device (11) being placed, through said unifying device (20), under control of a control device (30) by the steps of:
- providing an order (3) to said control device (30) through a user interface of the control device (30), said order (3) involving at least the designation of one of said multimedia devices (11) and at least one task to be performed by the involved multimedia device,
- converting said order (3) into a command (33) by means of a single application (37) within said control device (30), said command (33) comprising at least one identifier (12) assigned to a multimedia device (11) and at least one instruction describing said task to be performed by the involved multimedia device (11),
- sending this command (33) to the unifying device (20), said command (33) being prepared and sent in compliance with a generic communication protocol (ProtG) established between the control device (30) and the unifying device (20),
- interpreting said command (33) then sending the interpreted command (33') in accordance with the communication protocol (Prot1, Prot2, Prot3, Prot4) of the involved multimedia device (11),
- receiving then executing said interpreted command (33') by the involved multimedia device (11).

## Description

### TECHNICAL FIELD

The present invention relates to the field of multimedia devices located within a local environment, such as a home or a working area for instance. In this environment, multimedia content can be played onto one of these devices while additional related data can be provided by another multimedia device, e.g. through another source. There is an interest to increase the multimedia experience of an audience by gathering and sharing data or multimedia content, to be rendered on these multimedia devices, from several sources. By a synergistic effect, it is interesting to suggest new interactions to an audience.

### BACKGROUND

Communication technologies implemented in these multimedia devices for exchanging data are many and varied. For instance, a TV set can be controlled by a remote control by means of an infrared signal. Alternatively, this TV-set could be also controlled through Wi-Fi technology, by means of a specific application installed in a mobile computing device (e.g. a tablet computer or a smart phone). On the other hand, a smart phone could be connected to a mobile communication network (e.g. 3G/4G network) for the same purpose and with the same application. A home cinema set can be provided with wireless speakers compliant with Bluetooth technology or with a proprietary radio link in view to play music from the TV set, from a home computer or from any mobile computing device (smart phone, tablet, etc...). Due to these different technologies, data exchange is performed with specific communication protocols. In addition, these communication protocols may also differ from one brand to another.

In order to link two devices through a pairing process, for instance a tablet computer to a TV set in view to control the latter, it is necessary to install a specific application that is able to communicate with the TV set while providing some functionality. However, if the same tablet computer is used to control or to connect with one or several other devices, there is a need to install still one or several other applications. The use of different applications installed in a single mobile device to communicate with several devices decreases the battery life time of the mobile device and requires significant computing resources given that these applications are kept open in the background in the mobile device. Moreover, all of these applications require periodic updates. These updates are regarded as being tedious operations by the user. Finally, there is no possibility to have an overview of all connected or connectable devices, in particular given that several different connection technologies (Bluetooth, DSL line, Wi-Fi, NFC, etc...) are used by the multimedia devices within the local environment.

The wireless connection between two devices is performed through a pairing process. Some devices cannot be paired with more than one or two devices simultaneously. Moreover, if there are multiple devices in the same household or in a close neighborhood, there is a risk that a device attempts to connect to a wrong device through an automatic pairing procedure. For instance, the use of Wi-Fi connectivity for linking two devices is not optimal as such technology generates a signal that goes beyond the environment where these devices are located and can easily reach other households located in the vicinity. Accordingly and to protect such a connection against malicious persons, it is necessary to encrypt data exchanged by means of such a signal.

Besides, when the two devices to pair are not connected to the same network (e.g. when a TV set is connected to a DSL link, whereas the smart phone that have to be paired is connected to a 3G mobile network), the pairing cannot be performed by a single device discovery process given that these two devices are not mutually visible.

Therefore, there is a need to provide an efficient technical solution for enhancing the management of multimedia devices by a single control device within a local environment.

### SUMMARY OF THE INVENTION

In order to solve the above-mentioned problems, the present invention aims to suggest a method for managing multimedia devices within a local environment, wherein each of these multimedia devices is connected to a unifying device (acting as a hub) through a specific connecting means on the one hand, and in accordance with a specific communication protocol on the other hand. This means that not all these multimedia devices have the same communication means and/or the same communication protocol. The unifying device is connected to at least one data source. Each multimedia device is under control of a single control device, via the unifying device. Accordingly the control device is connected to the unifying device like every multimedia device. The multimedia devices do not communicate with each other through the unifying device, but the latter is used to provide a link between the control device and each multimedia device.

According to the present invention, this method suggests the following steps:
- providing (by a user) an order to the control device through a user interface of the control device; this order involving at least the designation (e.g. the identifier) of one of the multimedia devices and at least one task to be performed by the involved multimedia device,
- processing this order by means of a unique application, in particular converting this order into a command by means of this unique application running within the control device; this command comprising at least one identifier assigned to a multimedia device and at least one instruction describing the above-mentioned task to be performed by the involved multimedia device,
- sending this command to the unifying device; this command being prepared and sent in compliance with a generic communication protocol established between the control device and the unifying device,
- interpreting, then sending this command in accordance with the communication protocol of the involved multimedia device (identified by the its identifier); this interpretation being performed by the unifying device,
- receiving said command, then executing it by the involved multimedia device.

The control device acts as remote control device and may typically be a companion device (also known as "second screen") such as a tablet computer or a smart phone. Advantageously, the unifying device takes in charge all the communications between the control device and each of the multimedia devices, so that all the required interpretations (command converting) are processed by the unifying device and are no more performed by the control device. Most of the time, the control device communicates with the multimedia devices through the unifying device only. Preferably the control device always communicates with the multimedia devices through the unifying device only. Therefore, there is no direct communications between the control device and any of the multimedia devices for controlling purposes (i.e. in view to directly pilot the multimedia devices by using the control device).

Data that could be exchanged directly between the control device and some identification means of the multimedia devices are excluded from the above-mentioned communications for two reasons. Firstly, in some cases, the identification process can be performed by tags applied onto multimedia devices, such as near field communication (NFC) tags added as sticker on the multimedia device. Accordingly, there is no data exchanged between the control device and the multimedia device itself (i.e. strictly speaking). Secondly, the data are not use for controlling the multimedia device, but are only uses to collect personal data of the multimedia device. For similar reasons and given that data exchanges via NFC are used here for gathering device personal data only, any communication via NFC with multimedia devices equipped with embedded NFC tags (or NFC interfaces) are also considered as being excluded from direct communications used for control. Indeed, according to the present invention, such identification means (embedded or not in the multimedia device) are never used as an interface for controlling the multimedia device.

Thanks to the present invention, the control device requires a single application and a single communication protocol in order to send commands to any multimedia device in accordance with the orders of the user. Power and computing resources can therefore be saved at the control device. In addition, the user benefits from a friendly control device which is easy to use and takes also advantage from a single overview referencing all the multimedia devices connected or connectable to his home unifying device.

Moreover, there is no need to proceed with multiple application updates, given that a single application installed in the control device is sufficient to control all multimedia devices of his local environment. As the communication protocols are almost not subject to updates (by contrast with applications), the unifying device remains fully operable at any time. The control device requires no pairing when the user wants to control any multimedia device of his environment, since the unifying device remain connected at any time with each of these devices. Accordingly, this feature provides a smooth access to each of the multimedia devices with seamless pause, seamless transfer and/or resume of multimedia content when switching from one multimedia device to another. Besides, as the unifying device is powered by the mains (i.e. not wirelessly), power and computing resources for executing the orders of the user are saved as far as possible at the control device.

The present invention also refers to a system for implementing the above-mentioned method. Accordingly, the invention also suggests a multimedia management system that allows a control device to individually control each multimedia device belonging to the system within a local environment. To this end, this system comprises:
- a plurality of multimedia devices, each of them being connectable to a unifying device by means of a specific connection means on the one hand, and in compliance with a specific communication protocol on the other hand,
- a unifying device for administering the system,
- at least one data source connectable to the unifying device,
- a control device for controlling any of the multimedia devices,
- the control device controls any of these multimedia devices by exchanging, with the latter, commands or data through the unifying device only. This unifying device communicates with the control device in accordance with a generic communication protocol. The unifying device also acts as an interpreter to convert commands or data exchanged with the control device and transcribe these commands and/or data in accordance to the specific communication protocol belonging to the related multimedia device. Communications between the unifying device and the control device and/or all or part of the multimedia devices can be, if required, also be secured, for instance by means of a symmetric or asymmetric encryption process. The data exchanges between the control device and the unifying device are performed under a specific communication protocol (preferably an exclusive communication protocol) established between these two apparatuses. At least a part of said commands comprises at least one identifier assigned to a multimedia device and at least one instruction for designating a task to be performed by the related multimedia device, i.e. the multimedia device corresponding to this identifier.

The unifying device is further able to register each of the multimedia devices by listing properties specific to each multimedia device. These properties include:
- at least the connection means linking the multimedia device to the unifying device, in particular the kind of connection (PLC, WiFi, DSL, telephone line, Bluetooth, coax, optical cable, etc...) and its related information (e.g. electronic addresses, encryption/decryption key(s), authentication parameters, communication or transmission parameters, profiles, etc...),
- its communication protocol (communication rules, language, anomaly procedures, etc..) and,
- its rendering capabilities (such as image resolution, pixel size of the screen, supported picture formats, smart conveniences/interaction, etc...).

Upon request from the control device, the unifying device is further able of connecting to the data source (or to query it, if it is already connected) to get content and deliver it to at least one of the multimedia devices. This delivering is performed in compliance with the properties (capabilities and communication protocols) of the related multimedia device and via the relevant connection, namely through the suitable connecting means used for linking the relevant multimedia device to the unifying device.

Other advantages and embodiments will be presented in the following detailed description.

### BRIEF DESCRIPTION OF THE DRAWINGS

The present invention will be better understood thanks to the attached figures in which:
Figure 1 schematically shows an overview of the system of the present invention,
Figure 2 is a variant of Fig. 1 in which the main devices are connected to the unifying device through a local area network,
Figure 3 depicts the main components comprised in the unifying device according to one embodiment,
Figure 4 depicts the main components comprised in the control device according to one embodiment; this control device acting as master of the system of the invention.

### DETAILED DESCRIPTION

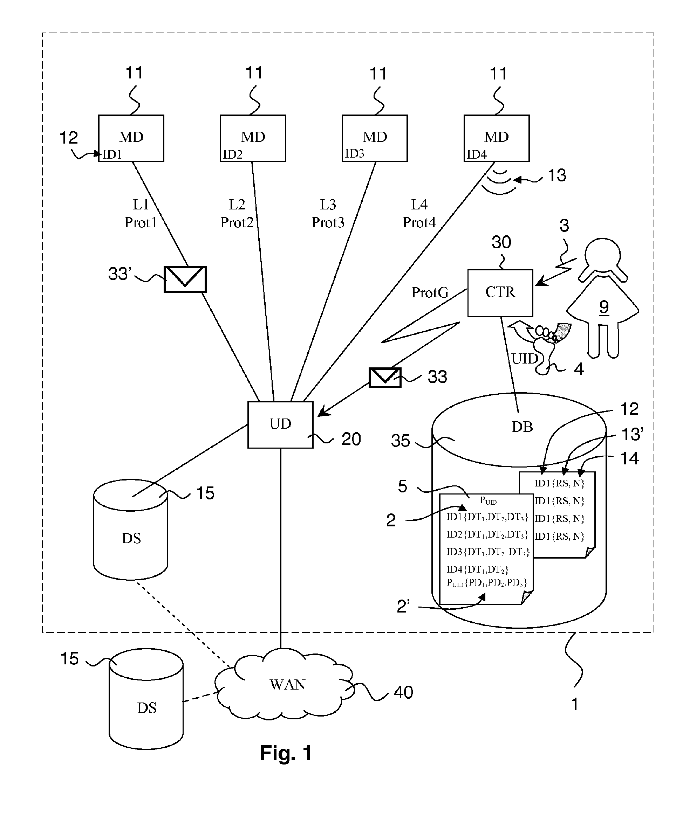

Referring to Fig. 1, it schematically illustrates the present invention within a home environment 1 of a user 9, taken as example in accordance with a preferred embodiment. Accordingly, it should be understood that the present invention is not limited to home environment but can be implemented in any other local environment, i.e. within a relative restricted zone, comprising all the multimedia devices 11 to manage. These multimedia devices are connected to a unifying device 20. Among these multimedia devices, one can found for instance a TV or a TV set (which may comprise TV, set-top-box, conditional access module), a beamer or a home cinema set, a Hi-Fi system, wireless speakers, an internet radio, a personal video recorder, a CD/DVD/Blue-ray player, any digital storage means, a portable multimedia device, any kind of personal computer, a printer, a play station, a wire or wireless digital telephone, a home webcam or any other home multimedia appliance connectable to a network or that may be controlled by means of a remote control interface.

As these multimedia devices are many and varied, they involve many connecting means, including Wi-Fi, Bluetooth, ZigBee, infra-red link, near field communication (NFC), radio link, wire connections such as DSL, power lines communication (PLC), telephone lines, etc... Accordingly, each multimedia device is provided with at least one specific connection means (connectors, interface, transmitter/receiver) in accordance with a privileged technology. In addition, even if two multimedia devices share the same technology through their communication means, protocols used for exchanging data could be different. Accordingly, one may consider that each multimedia device is assigned to a specific communication protocol.

As shown in Fig. 1, the first multimedia device identified by the identifier 12 (ID1), is connected to the unifying device 20 by means of a first specific connection means, schematized by the link L1, and in compliance with a first specific communication protocol Prot1. Four multimedia devices 11 are shown, as example, in this figure. Of course, this number is in no way restrictive. Preferably, each of these multimedia devices 11 is connected in an independent manner, so there is a direct communication link L which connects each media device 11 to the unifying device 20.

According to the preferred embodiment, the unifying device is an independent device, in particular a standalone device, acting as a sole central communication point. However, the unifying device could be physically part of one of the multimedia devices. The unifying device 20 acts as a slave device with respect to the master device of the system which is a control device 30 handled by the user 9. Each multimedia device 11 is under control of the control device 30, via the unifying device 20. The control device 30 can be regarded as being a universal remote control, preferably as a smart remote control such a companion device which can be used simultaneously with a primary device (i.e. any of the multimedia devices 11). For instance, the control device is used as a second screen in conjunction with a TV set. Thus, a tablet computer or a smart phone (or similar electronic devices) can be ideally used as control device of the present system.

The unifying device 20 is connected to at least one data source 15 which provides any kind of multimedia content to the entire system, i.e. at each multimedia device 11. The data source 15 can be regarded as being the main content source of the system (but nevertheless not the unique source). This data source 15 can provide audio and/or video content as well as data files, such as applications or any other kind of firmware or software (e.g. for upgrade/update purposes), to any multimedia device 11.

This content can be supplied as a continuous content stream, or as data to be downloaded from a remote server. To this aim, the data source 15 can be for instance an audio/video provider, a data provider, a TV broadcaster or any other provider (web hosting device, web server, cloud) which is able to supply content e.g. via a wide area network 40 such as Internet. Therefore, the data source 15 can be connected to the unifying device 20 through various connections, for instance by means of a cable (telephone line, DSL, coaxial line, optical fiber, power line, etc..), satellite link, terrestrial digital broadcasting (radio/TV broadcasting), etc... Accordingly, the data source refers both to remote and domestic content sources. Besides, it should be understood that, although only one data source 15 is schematically shown in Fig. 1, it is clear that the system may include several data sources connected to the unifying device 20, either directly or indirectly, e.g. through the wide area network 40.

According to the present invention, each multimedia device 11 is controlled by the control device 30, via the unifying device 20 by the following steps.

Firstly, the control device 30 receives an order 3 through a user interface, preferably built into the control device. The user interface can be a voice recognition unit (coupled to a microphone), a touch screen, a keyboard, preset buttons, a computer mouse or any other means through which the user 9 can give an order to the control device 30. This order 3 implies at least the designation of one of the multimedia devices 11 and at least one task to be performed by this multimedia device(s). The designation of the multimedia device can be an explicit or implicit designation.

An explicit designation can be provided by indicating the relevant multimedia device, for instance by providing its identifier 12 either directly through the user interface or indirectly by means of detection means (e.g. a built in camera or an NFC compliant unit).

An implicit designation derives from a context, in particular from the task to be performed by a specific multimedia unit. For instance, if the system (of the local environment 1) includes only one TV set and the task refers to watch a TV program, then the relevant multimedia unit is implicitly designated by the task to be performed. According to another example, if the task is to watch a TV program and that the user stands close to a TV set, then this TV set will be automatically recognized, or suggested, by the system as being the suitable multimedia unit to perform the requested task. An implicit designation may also derive from the latest designation. This means that unless an explicit designation (or an intentional and unambiguous implicit designation) is not provided, the last designation can be kept and taken into consideration for any future task. Thus, the user 9 is not obliged to provide the identifier of the multimedia device 11 whenever he wants to give successive orders 3 to the same multimedia device 11. Accordingly and thanks to the present invention, it is not always necessary for a user to explicitly specify the relevant multimedia unit onto which the designated task has to be carried out.

Then, as a next step the control device 30 converts the order 3 into a command 33 by means of a single application which has been previously installed in the control device. This command comprises at least one identifier 12 (ID1, ID2, etc...) assigned to the relevant multimedia device 11 and at least one instruction describing the task to be performed by this multimedia device. The identifier derives from the above-mentioned explicit or implicit designation of the multimedia device. The instruction stems from a transcription of the task in a language understandable by the unifying device.

This command is schematically illustrated in Fig. 1 by an envelope since it takes the form of a control message to be sent, in the next step, by the control device 30 to the unifying device 20. Sending this command can be performed via any communication means (wire or wireless means). Preferably, the unifying device remains reachable by the control device, whatever the location of the user which handles the control device. The command has been prepared and sent in compliance with a generic communication protocol ProtG, established between the control device 30 and the unifying device 20. This generic communication protocol is used, on the one hand by the application installed in the control device, and on the other hand by a corresponding firmware installed in the unifying device. A priori, the generic communication protocol does not comply with the communication protocols (Prot1, Prot2, etc...) of the multimedia devices 11 and thus cannot be used to perform any data exchange between the control device and any of multimedia devices. Preferably, this generic communication protocol is an exclusive communication protocol.

Upon receipt of the command 33, the unifying device interprets this command before sending it in an interpreted form 33' which is consistent with the communication protocol of the recipient multimedia device 11. To this end, the unifying device firstly determines all the identifier(s) 12 comprised in the command. Then, it preferably checks that all the identifiers are well known by comparing them with a list of known identifiers 12 which are part of the system. This list also allows the unifying device to know what is the respective specific communication protocol that has to be used which each multimedia device. The identifiers and the respective communication protocols can be stored, for instance, in a form of records; each record comprising a pair of data (namely the ID 12 and the related protocol). In addition, each record can further comprise the designation of the relevant communication means assigned to the multimedia device; in particular in the case where one considered that this specific communication means is not already included in the specific communication protocol.

The above-mentioned list and the records can be stored in a register or a memory of the unifying device and can evolve, for instance when some multimedia devices are added to the system or are removed. The updating of this list (and the records) can be done automatically by a discovering process which can be run during installing a new multimedia unit or when a multimedia unit does not respond anymore, for instance after several predefined attempts, and should be considered as being removed from the system. Alternatively, the discovering process can be run manually, for instance by sending a specific command from the remote control to the unifying device. Such a command can be perceived as being an initialization or a boot command.

In the example shown in Fig. 1, the command 33 is addressed to the first multimedia device 11 having the identifier ID1. Accordingly, the interpreted command 33' shown in this figure is sent to this first multimedia device.

Owing to this method, the unifying device 20 is not only used as a common and sole input gate of the system for supplying main content to the multimedia devices, but it also acts as a proxy server given that it is also in charge of converting the command 33 into its interpreted form, namely into a so-called interpreted command 33'. Advantageously, the control device 30 is fully able to control each of the multimedia devices by means of a single application (i.e. a single firmware or software) installed therein.

According to one embodiment, the designation of any multimedia device 11 can be performed, by the control device, by automatically obtaining the identifier 12 (ID1, ID2, ID3, etc...) assigned to the involved multimedia device 11. To this end, the identifier 12 is transmitted to the control device 30 in the form of an electromagnetic signal. Such a signal can be a Bluetooth signal, a visual optical signal, an infra-red signal, a short range signal such as NFC signal or any kind of radio signal having a relatively short range.

In addition to the identifier 12, each multimedia device 11 could also transmit, to the control device, any kind of security data in view to establish a secure and authenticated link for preventing any piracy. Such data may include pairing keys (shared or public keys of the multimedia device), digital certificates or any other credentials. According to a preferred embodiment, such data could be stored within the unifying device and can be retrieved directly by querying the unifying device. According to another embodiment, such data are stored outside of the user environment 1, for instance in a particular authority onto a remote server.

In one embodiment, the identifier 12 is obtained by performing a visual recognition process of an image taken by a digital camera (typically built in the control device for practical reasons). This image can be an image of the multimedia device itself. In variant, this image can be an image of the environment in which this multimedia device is located. This environment can be a room or a part of such a room. By including a digital recognition process in the application of the control device, this control device is able to recognize, either the multimedia unit itself, or its environment. Alternatively, the recognition process can be performed by another device, e.g. within the unifying device, within a head-end or within any other dedicated device (e.g. a remote server). According to an easy and effective embodiment, the visual recognition of the identifier 12 assigned to the multimedia device is performed by means of a specific pattern located in the image taken by camera. Such a pattern can be a readable graphical code which can, for instance, be printed on a sticker and put on the multimedia device as a label. This graphical code can be a barcode having one or two dimensions such as so-called "QR code" referring to "Quick Response Code", or any other code having a specific design.

According to another embodiment, the identifier 12 is obtained by the control device by means of a near field communication signal transmitted between the control device and the multimedia device. In the case where the device is not already NFC compliant, an NFC tag can be affixed onto this device in order to easily render it NFC compliant. Accordingly, it should be kept in mind that such a tag is not necessarily part of the multimedia device, but it should be considered as being merely assigned to this device.

In variant, the identifier 12 can be obtained by means of Bluetooth signal (or infra-red signal) transmitted between the control device and the multimedia device. Once again, this signal could be emitted by a small emitter/receiver secured onto the housing of the multimedia device. Accordingly, it is not necessarily part of this multimedia device. Upon request by the control device (through the same technology), the emitter/receiver sends it back a message comprising at least the requested identifier 12 (and possibly other information such as secure pairing data if applicable). Advantageously, by manually affixing such identification means (emitter/receiver) onto multimedia devices, it is possible to easily equip any multimedia device with any kind of identification means (i.e. using any technology such as IR, NFC, Bluetooth, electronic messages, etc...), even if this multimedia device is not compliant with the technology of this identification means.

In a further variant, the identifier 12 can be obtained by a message send by the multimedia device to the control device through a wide area network to which at least the control device and the multimedia device are connected. Such a message may be a SMS (Short Message Service) and the related network will be a mobile phone network. According to another case, the message may be an email and the wide area network may be an electronic messaging network such as Internet.

According to another embodiment, the identifier assigned to the involved multimedia device is obtained indirectly through a visual recognition of a multimedia content to play. Accordingly, the visual recognition is performed on the basis of an image of a multimedia content support, for instance on the recognition of the image of a CD sleeve or a CD case. By recognizing the format (shape and/or size) of such a CD sleeve/case or the standardized logo referring to the multimedia content (in particular to its support), the control device or an appropriate recognition application can automatically determine that the user intends to play an audio CD. Accordingly, the instruction describing the task to perform by a multimedia device may order to switch on this multimedia device (in the present example a CD player) and/or to open the CD compartment door or to play the loaded CD. Thus, the identification of the multimedia device can be performed through the detection of the nature of a multimedia content. Although the above example refers to an audio CD, the detection of other supports such as blue-ray disc (in particular via the standardized Blue-ray Disc logo), DVD (via the standard DVD logo), memory cards, etc... is also applicable. The multimedia device can be also identified by other kinds of pictures or logos, for instance by recognizing the logo of a TV channel, the system (in particular the related application) will automatically understand that the user intends to watch TV, especially the TV channel corresponding to this logo. In the case where a multimedia content support is playable onto several multimedia devices, the system can further ask the user to designate the suitable multimedia device, among the available devices, or it can chose one of these multimedia device on the basis of a default choice or on the basis of other criteria, such as the proximity of the user with respect to one of the available devices.

Referring now to the tasks that have to be performed by the multimedia device further to the order 3 provided by the user, it should be noted that these tasks depend on possibilities and features of each device. Among these tasks, the first aims to switch on the multimedia device. There are several manners to switch on a multimedia device by means of the control device 30. One of them is to switch on the multimedia device and play (or tune) the same channel (audio or TV channel) that was rendered when it was switched off, irrespectively of the user. Another solution is to tune the device always onto the same default channel. The following solution suggests taking into account the user profile in an automatic manner. To this end the control device 30 can perform the following steps before sending the related command 33 to the unifying device 20:
- gathering identification data 4 (UID) of a current user 9 (i.e. the user which currently handles the control device) by means of a built in sensor,
- connecting to a database 35 comprising profiles 5 (PUID) relating to potential users of said control device 30, each of these profiles comprising setting data 2 (DT₁, DT₂, DT₃, etc...) referring to a specific multimedia device identifier 12 (ID1, ID2, etc...),
- selecting the profile 5 assigned to the user which corresponds to the identification data 4, and
- including into the command 33, a second instruction (or complementary data) for presetting the targeted multimedia device 11 in accordance with setting data 2 (relating to this multimedia device) comprised in the selected profile 5.

In Fig. 1, identification data 4 is schematically illustrated by a footprint in order to show that identification data preferably refers to biometric data of the user 9, e.g. data relating to fingerprint, to user's iris, the shape of the user's face, user's voice, etc... However, identification data 4 can also refer to non-biometric data such as the name of the user, a number, a picture, a logo or anything else. Gathering identification data 4 can be achieved by means of a dedicated sensor, such as a biometric sensor, a camera, a microphone, or by means of the user interface of the control device, for instance a touch screen used to enter a user name or a user password. The sensor can be integrated in the control device or it can be merely connected thereto.

As shown in Fig. 1, the database 35 is linked to the control device, preferably it is included into the control device, for instance as a part of the application (firmware) installed therein. Alternatively, the database 35 may be located within the unifying device 20 (or connected directly to the latter). It may be also located even further, e.g. at the head-end or in a remote authority system. However, the best way is to integrate the database 35 into the control device, as mentioned in reference to the first embodiment.

In the interest of simplifying Fig. 1 , only one user profile 5 has been illustrated as content of the database 35. However, it is clear that database 35 can comprise several profiles 5, depending on the number of users 9 authorized to handle the control device 30. Each profile 5 is identified by a profile identifier PUID assigned to a user 9 so that identification data 4 (personal data) of this user allow to known the profile identifier PUID associated therewith. The profile identifier PUID is not necessarily a unique profile identifier, so that a profile 5 could be shared by several users 9. For instance, it is possible to define a user profile 5 assigned to several children, thus avoiding to establish and to assign several identical profiles to each of these young users.

Each profile 5 comprises setting data 2 (DT₁, DT₂, DT₃, etc...) specific to one multimedia device 12, for instance in the form of records where each record is assigned to a specific multimedia device through its identifier 12, as shown in Fig. 1. Setting data can typically refers to the preferred TV channel(s) or radio frequency of the user, the preferred volume level, a preferred playing mode (shuffle, repeat, boost bass, etc..) of a CD/DVD player, a preferred picture brightness, etc... This setting data can be defined during an initialization step (aiming e.g. to identify a new user) and can be changed in an easy way at any time. Depending on the application (firmware) which manages this setting data, their access can be limited by a password (e.g. one password for each profile, several personal passwords or one administrator password for all profiles).

Preferably, the profile 5 also includes other personal data 2' (PD₁, PD₂, etc...) of the user 9, namely features describing the user such as the age, the sex, tastes, favorites, interests, hobbies, etc.... As shown in Fig. 1, personal data of the user can stand in another record referring to the profile identifier PUID assigned to this user 9.

Accordingly, the step aiming to select the profile 5 assigned to the user corresponding to identification data 4, collected at the previous step, can be improved by a substitution step aiming to select the profile 5 whose personal data 2' corresponds as far as possible to identification data 4 of the current user. For instance, if a biometric sensor, such as a voice or a face recognition unit, is used to identify the current user 9 (by gathering identification data 4), this sensor will be able to determine e.g. if the voice or the face of the current user refers to an adult or to a child, to a boy or to a girl. Accordingly, and without having fully identified the current user, the control device will be able to select the profile 5 corresponding as far as possible to the current user. This functionality can be useful in particular when visitors are authorized to handle the control device whereas their profiles have not been entered into the database 35.

In any case, thanks to the profile selection step of the present method, the system is able to automatically suggest a multimedia content which potentially matches with the current user as soon as the multimedia device is switched on. In the worst case (e.g. if no profile can be selected), the system can be defined to select a default content.

According to the preferred embodiment, the steps aiming to connect to the database 35 and to select the profile 5 are performed by the control device 30. However, these steps can be performed by the unifying device 20 or even by the head-end or any remote authority. Accordingly, once collected, identification data 4 is not necessarily processed within the control device 30 but can be processed by the head-end, by the unifying device or by another dedicated slave device (remote server).

In reference to another task it should be noted that, if the remote control 30 is a companion device provided with its own screen (i.e. a second screen), this control device can be used to get the setting pages of the multimedia device such as a television, in order to provide to the user means for setting or tuning the TV without masking the TV screen of the multimedia device. Accordingly, the so-called known function "picture-in picture" could be put aside, since the first image can be displayed on the TV screen while the other image is displayed on the second screen (companion device). For instance, if the user wants to browse the EPG (Electronic Program Guide) while the audience is currently watching a TV program, the control device 30 can sent an appropriate command 33 to the TV-set in order to export EPG data (and preferably related functions) towards the control device 30, via the unifying device 20. Accordingly, the user will be able to find any kind of information in the EPG displayed on the screen of the companion device without disturbing the audience.

Although the EPG has been taken here as an example of available pages provided by the TV set, it should be understood that other pages (e.g. status pages or configuration pages), such as parental setting, recording setting, ordering a movie via VOD (Video on Demand), checking cost for setting limits for paid content, etc... are also applicable. Therefore, features and functions provided by the TV set are merely redirected to the screen of control device instead of being accessible from the TV via its own screen. Thanks to this feature, the companion device acts as a true second screen of the TV in a similar manner as if the TV was provided with two distinct screens while keeping all of these functions. Advantageously, such functionality allows the user to known what features the TV does support, without masking the main screen, namely the screen of the TV.

Similarly, the screen of the companion device could be used for listing the tracks of a CD/DVD during its playing by a CD/DVD player or could be used to search a song in a disk library, even to pre-listen or preview a track of an audio or video collection.

Among other tasks executable by the multimedia devices, one of them consists to play a multimedia content onto one of these multimedia devices. The present invention suggests additional steps to automatically determine, preferably by the control device, the available multimedia device which is most suitable to execute this task. Accordingly, the method further suggests the following steps:
- determining the nature N of said multimedia content (nature N can refer to audio and/or video),
- connecting the control device 30 to a database 35 referencing each multimedia device by means of at least its identifier 12 and the nature(s) 14 of multimedia content that this multimedia device 11 is able to play,
- determining if one of said multimedia devices 11 is able to play the multimedia content by comparing said nature of the multimedia content with the nature(s) 14 assigned to the multimedia devices 11 and, in case of positive outcome, charging the identified multimedia device 11 to play said multimedia content, for instance by sending a relevant command 33 to the unifying device 20 if the comparison is processed by the control device (the comparison process may be undertaken by another device, such as the unifying device 20).

In case where several multimedia devices 11 are able to play the above-mentioned multimedia content, the process can select a device by default or it can select a certain multimedia device defined for instance as being the multimedia device preferred by the user for playing this kind of content, or it can select the suitable multimedia device that is closest to the control device. This latter solution may be implemented by acquiring an electromagnetic signal 13, at the control device 30, from one of the suitable multimedia devices 11. Such an electromagnetic signal 13 may include any kind of waves which are either emitted by an emitter assigned to the multimedia device or reflected (such as the light) by the multimedia device, by its environment or by a pattern assigned to the multimedia device.

In this case, the following steps are rather performed:
- determining the nature N of the multimedia content,
- connecting the control device to a database 35 referencing each multimedia device 11 by means of: its identifier 12, a reference signal 13' (RS) assigned to this multimedia device 11 and the nature(s) 14 of multimedia content that this multimedia device is able to play,
- activating a detecting unit 32 (preferably built into the control device) to acquire a specific electromagnetic signal 13 from one multimedia device 11,
- comparing the acquired electromagnetic signal 13 with the reference signals 13' stored in the database 35 until a match identifies the multimedia device 11 via its identifier 12,
- determining if the identified multimedia device 11 is able to play the multimedia content by comparing the nature N of the multimedia content with the nature(s) 14 assigned to this multimedia device and, in case of positive outcome, charging the identified multimedia device 11 to play said multimedia content (for instance by sending a relevant command 33 to the unifying device 20 depending on which device performs the comparison).

Whatever the steps of this method, in one embodiment, the step aiming to determine the nature N of the multimedia content, preferably by the control device, is performed by a visual recognition of a depiction of this multimedia content. To this end, the control device can take a picture of this depiction, e.g. by means of a digital camera linked to the control device or integrated in the latter. The depiction can refer for instance to an image such as a CD/DVD jacket, the logo of a TV channel. By recognizing e.g. the standard logo printed on a CD/DVD case, the control device can identify the nature of the multimedia content targeted by the user and can therefore automatically activate the appropriate multimedia device.

In variant, the depiction can also be used to identify which multimedia content the user wants to play. To this aim, the depiction can also refer to textual information such as the title of a movie, of music album, the name of an artist, the name of a TV program, the name of a TV channel, etc... Same information is also valid for radio or other data (e.g. private data) such as a holiday photo album stored in a particular file of any storage means (acting as multimedia device). For instance, by providing the name or a keyword of the corresponding file or directory as a depiction of a multimedia content, e.g. the holiday photo album may become identifiable. Owing to an indexing process of keywords contained in the name of a file/directory (or even in the content of this file), a processor is able to quickly (i.e. almost instantaneously) identify the relevant file(s) corresponding to some searched keywords.

It should be kept in mind that the control device can be used for collecting information such as pictures, logos, keywords, etc... without necessarily processing them in view to determine if a particular multimedia device is able to play a multimedia content or to suggest to the user which multimedia device is available to perform this task. This means that processing such information could be entrusted to another device such as the unifying device or a remote server. After processing such information, the latter device could send to the control device a response corresponding to the result of the processing. Therefore, the processing can be outsourced by other devices.

In one embodiment, providing the name (or any other kind of depiction) of the target multimedia content can be performed through the camera of the control device. In some cases, for instance if the depiction of the multimedia content is big enough, such as a CD/DVD jacket or a cover picture, the control device (or the related application) is able to immediately determine the target content without misunderstanding. However, in some cases, the control device further needs the intervention of the user. For instance, if the control device is a tablet computer, the camera of the control device can provide to the user an image of a printed TV schedule, or any other kind of information provided for instance by a magazine or a newspaper, onto the (touch) screen of the tablet computer. Then, by selecting (e.g. by touching) the appropriate word or area displayed on the screen, the user can select for instance the name of a TV program (e.g. a favorite TV show) or the logo of a TV channel that this user wants to see. This manner of doing can be a well suitable approach to select a particular program, faster than searching in an EPG or entering a scheduling code (e.g. ShowView / VCR Plus+ code). Other kinds of rendering means (e.g. smart phone, TV, computer screen, etc...) and other kind of selection means (such as a computer mouse, infrared pointer, push button selector, voice command, etc...) could be used for selecting the appropriate depiction (text/image) of the targeted multimedia content.

Accordingly, the control device is preferably provided with hardware and specific properties enabling to render images and to select elements of this image. To perform these functions, the control device is preferably provided with a touch screen. Preferably, this screen acts as second screen in order to provide to the user a so-called companion device. Most preferably, the control device is provided with hardware and software for rendering multimedia content in a similar manner as any of the multimedia devices. Thanks to such a second screen, the control device can be used for switching the content rendered on any of the multimedia device with that rendered on the control device, or vice-versa. For instance, if a user uses the second screen (control device) in order to found complementary information about a TV program watched by an audience and if he wants to share information found through his companion device, he can send a relevant command to the TV (via the unifying device) so that the content rendered on the second screen is displayed on the TV watched by the audience. According to a reverse process ordered by a corresponding command sent by the user, the multimedia content rendered on any multimedia device can also be placed on the companion device (i.e. the control device).

In a similar manner, the command sent by the control device to the unifying device could comprise an instruction for swapping (i.e. for exchanging) the content rendered on any of the multimedia devices with that rendered on the control device. Thanks to such a swapping command, some information found through the companion device can be displayed on a TV watched by an audience and the TV program which was rendered on the TV can be recovered on the companion device and can e.g. be paused for instance. By switching a second time the content between the companion device and the TV, the audience may continue to watch the TV program on the TV display. Alternatively, the audience may be interested to watch information found by the companion device on the TV display, while a minority of the audience prefers not to be interrupted and decides to continue to watch the TV program on the second screen (i.e. the companion device).

In the case where the minority of the audience is not satisfied to watch the TV program on the small screen of the companion device, the multimedia content can be switched or swapped again onto another TV display located for instance in another room. Thus, the user can use the companion device as a sort of "following screen". The swapping command is not limited to display merely the content e.g. as a slide or as a "print screen", but allows to fully exchange the content sources so that multimedia device is supplied with the content source that fed the companion device and the latter is supplied with the content source that fed the multimedia device. Advantageously, owing to the swapping command, the multimedia content can be transferred from a first multimedia device to a second multimedia device (located for instance in another room) by means of the control device acting as a companion device. A dedicated protocol or an Application Programming Interface (API) can be used to pass to second multimedia device all details about the multimedia content rendered on the first multimedia device. These details include stream origin, timestamps and context information allowing exchanging the multimedia content.

In the case where the above fully exchange is not feasible, it may be possible to handle the display by enabling a remote display between both screens (namely the screen of the first multimedia device and the screen of the second multimedia device), the reception decoding and execution of any application still occurring on the first multimedia device, only the display being exchanged, in particular transferred from one multimedia device to the other. In this case, the display of the second multimedia device can be regarded as a dummy screen (similar to a computer monitor or a terminal screen) given that processing unit and decoding unit remain on the first multimedia device.

According to the system depicted in reference to Fig. 1, the unifying device 20 acts as an enhanced router given that it is not only used for forwarding data packets (e.g. multimedia content) from a data source (e.g. a digital TV supplier providing multimedia content through a DSL line), but it is also used for interpreting commands 33 (sent by the control device 30) by converting them into an interpreted form 33' which is compliant with the communication protocol of the relevant multimedia device 11. It should be noted that the interpreted form 33' of the command 33 does not necessarily comprise the identifier 12 of the targeted multimedia device 11 (i.e. the recipient of the interpreted command 33') given that, thanks to the identifier 12 comprised in the command 33, the unifying device 20 already knows to which recipient (multimedia device) the interpreted command 33' has to be sent.

According to the embodiment shown in Fig. 1, the multimedia devices 11 located within the home environment 1 do not necessarily require to be connected to the same network. As an example, a multimedia device 11 can be connected e.g. to Internet via a DSL line or a Wi-Fi connection, while another multimedia device can be connected to a provider of content broadcasted by satellite or it can be connected to a telephone provider via a mobile network or a telephone line. Thanks to the unifying device 20, all of the multimedia devices 11 can be easily reachable by the same control device 30, without requiring any configuration (in particular at the control device) when the user wants to control successively several multimedia devices while each remains compliant with a specific communication protocol and/or compliant with specific communication means.

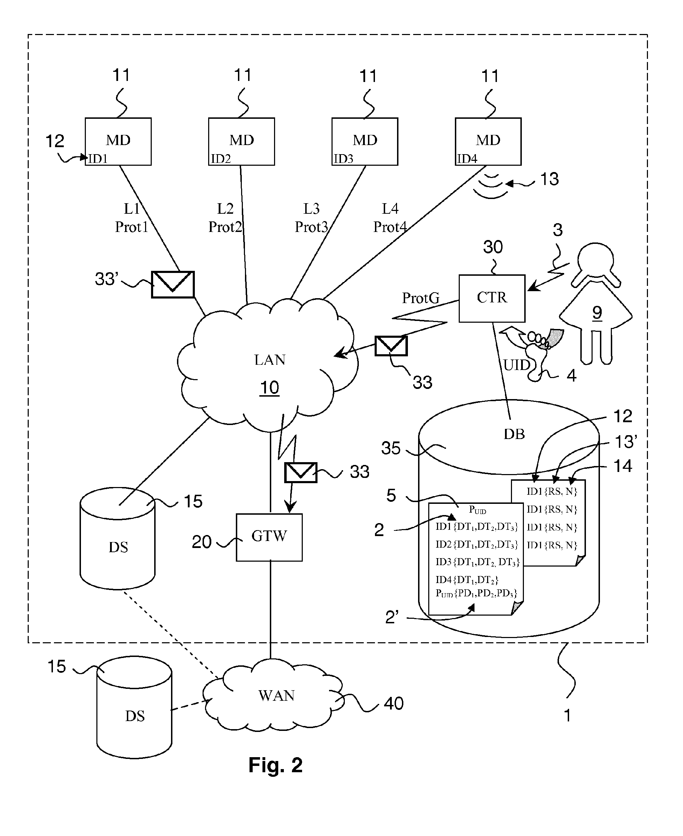

Referring to Fig. 2, the latter shows a variant of the embodiment depicted in Fig. 1 wherein the system of the present invention further includes a local area network 10 (LAN) to which each multimedia devices 11, including the unifying device 20, is connected. The main difference between the system of Fig. 1 and that of Fig. 2 is the implementation of the local area network 10 between the unifying device 20 and each device 11, 30. For instance and as shown in this figure, the first multimedia device identified by the identifier 12 (ID1), is connected to the local area network 10 by means of a first specific connection means (e.g. a preferred connection means), namely the link L1, and in compliance with a first specific communication protocol Prot1. In this configuration, the unifying device 20 acts as a home gateway GTW as denoted in Fig. 2.

The local area network 10 is administered by the home gateway 20 acting as a management device (under control of the control device 30). According to the preferred embodiment, the home gateway is connected to the local area network as an independent device, similarly to the multimedia devices 11. However, the home gateway could be also physically part of one of these multimedia devices. Each multimedia device 11 is under control of the control device 30, via the home gateway 20 and the local area network 10. Several data sources 15 may be connected to the local area network 10, in the same manner as any multimedia device 11. The database 35 could be linked to the local area network 10 as an independent unit similarly to any of the multimedia device 11. To reach the home gateway 20, all the commands 33 transit through the local area network 10. For practical reasons, the local area network preferably refers to a wireless network.

To implement the above described method, the present invention also refers to a multimedia management system. As shown in Fig. 1, this system comprises a plurality of multimedia devices 11 located within a local environment such as a home or a work environment. Each multimedia device 11 is connectable to the unifying device 20 by means of a specific connection means and in compliance with a specific communication protocol. In other words the multimedia devices 11 are not all compliant with a single communication protocol and/or are not all connectable to the unifying device 20 through the same kind of connection means. The system further comprises at least one data source 15 connectable to the unifying device, either directly or via an intermediate means such as a network, in particular a wide area network 40. The system comprises a control device 30 for controlling any of said multimedia devices 11.

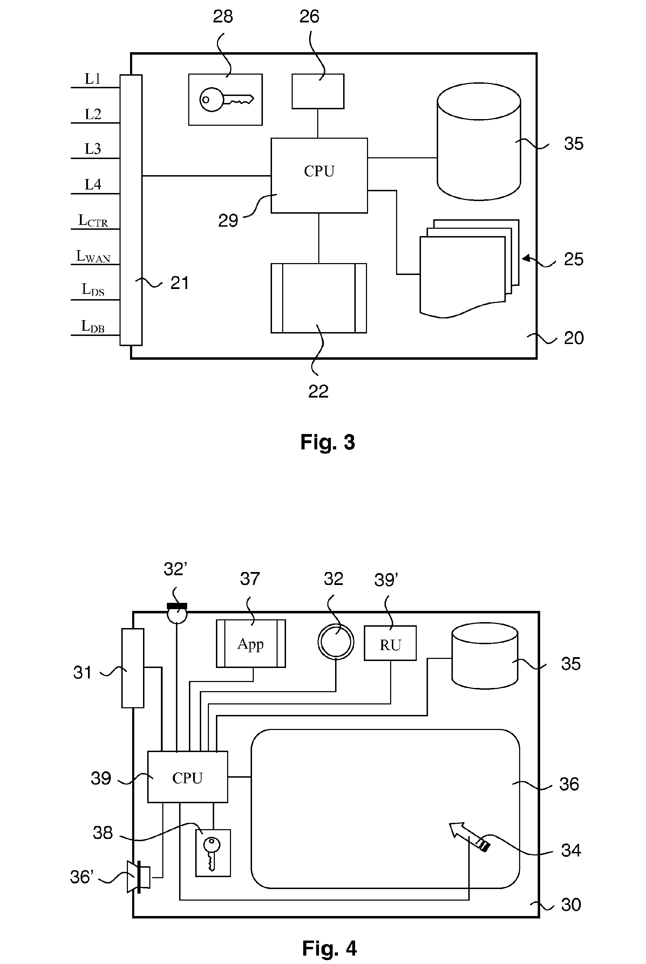

As already mentioned in reference to the method, the control device 30 directs any of these multimedia devices by exchanging, with the latter, commands or data through the unifying device only. As the unifying device acts as an interpreter for all the communication exchanged between the control device and the multimedia devices, it is provided with an interpreter 22 (Fig. 3) to convert the commands or data in accordance with the specific communication protocol of the multimedia device or with the generic communication protocol.

The unifying device 20 is able to register each of the multimedia devices 11 located in the local environment 1 by listing relevant properties (detailed in reference to the above-mentioned method) specific to each multimedia device. To this end, the unifying device will comprise a register 25 (Fig. 3) or connection means for connecting the unifying device to a remote register.

Upon request from the control device 30, the unifying device 20 is further able of connecting to the data source 15 to get content (multimedia or data content) and deliver it to at least one of the multimedia devices 11, in accordance with the properties of each multimedia device and through the relevant connection means and the relevant communication protocol. To this end, the unifying device comprise an I/O interface 21 for connecting any device or any component for data exchange, in particular for establishing communications with each of the multimedia device 11 (according to their own communication means), with the control device 30, with the data source 15 and even, if necessary, with the database 35 and/or with the wide area network 40. Accordingly, the I/O interface 21 comprises various connection means in order to be compliant with any conventional communication technologies. In Fig. 3, several connectors are schematically shown in reference to the I/O communication interface 21. For instance, lines L1 to L4 are shown with reference to communication means required to connect the four multimedia devices 11, shown as example in Fig. 1 and 2. However, all or a part of these lines L1-L4 could be combined into a local area network line (LLAN)

The unifying device 20 can be a router or a home gateway. Nevertheless, this unifying device must be able to interpret in any cases commands 33, 33' so as to convert them in accordance with the appropriate communication protocol.

Depending on the embodiment, the unifying device can further include the database 35. If necessary, the unifying device also comprises a security unit 28, for instance to encrypt/decrypt messages exchanged with other devices/authorities (including with control device 30 and/or all or part of the multimedia devices) or to handle and exchange security credentials, passwords, encryption keys enabling secure connections with any device/component (multimedia device, control device, database, data source) connected to the unifying device, even if these connections goes through an IP network (LAN 10, WAN 40). Accordingly, at least some of the connecting means L1, L2, L3, L4 and/or at least some of the commands 33, 33' are secured against malicious persons. Therefore, these connecting means and/or commands (or messages) involve an encryption/decryption process performed both by the sender and the recipient (i.e. the relevant multimedia device 11 / the unifying device 20 / the control device 30). In fact, encrypted exchanges between the multimedia devices 11 and the unifying device 20 depends on the multimedia devices, in particular if these device are provided with encryption/decryption means for supporting exchanges (writing/reading) of encrypted data (messages or content). Besides, it should be noted that data coming from the data source 15 can be already encrypted, in particular in the case where such data refers to the pay TV field.

In order to provide content compliant with rendering capabilities (such as picture size, resolution, etc...) of each multimedia device, the unifying device is also provided with a reformatting unit 26. Accordingly, the unifying device can rescale content for instance when moving the current viewing from an HD or UHD display to a tablet or smart-phone through the suitable communication means.

To monitor and control all of the components of the unifying device 20, the latter comprises a central processing unit 29.

In order to receive orders 3 from the user 9, the control device is provided with a user interface. As partially shown in Fig. 4, the user interface can be a picture recognition unit 39' coupled to a digital camera 32 for processing digital pictures taken by this camera (or for recognizing gestures), a voice recognition unit 39' coupled to a microphone 32' for processing data recorded through this microphone, a touch screen 36, a keyboard, preset buttons, a computer mouse/pointer or any other means through which the user 9 can give an order to the control device 30.

In one embodiment, the control device 30 is provided with a detecting means 32 (Fig. 4) to automatically obtain the identifier 12 of the multimedia device 11. According to the preferred embodiment and as shown in Fig. 4, the detecting means (detector or detecting unit) 32 is a digital camera. Most preferably, this digital camera is built in the control device 30 although it could be also connected to the control device via an external connector. This camera is used by the control device 30 in order to take photos which will then be used by a recognition process for identification purposes. The recognition process can be used to identify objects, persons, or environment; this depends on what must been detected in the photos.

For instance, the recognition process can be used for recognizing a multimedia device such as a TV, speakers of an audio system, a smart phone, a beamer, game console, etc... The shape, the size or any specific marking elements can be used as features for identifying the multimedia device in the recognition process. The recognition process can also be used for identifying where the user is located. To this end, the process will take into account the whole picture taken by the digital camera in order to recognize the environment depicted by this photo. Similarly, the recognition process will search some specific features in the photos, for instance specific furniture, an ornamental plant, a window, a picture hanging on a wall, etc... in order to identify in which room the user is located. As the rooms in a home environment are generally well different from each other, such a recognition process is reliable and relatively easy to implement while providing a quick result. Finally, the recognition process is also usable to identify the user itself, e.g. by taking a photo of the user's face. This can be easily done, in particular if the control device is a tablet computer or a smart phone provided with a relatively wide screen, with a rear digital camera and a front digital camera. The criteria for recognizing the user's face are well known and therefore are not detailed in the present description.

The recognition process can be performed by a recognition unit 39' within the control device (as shown in Fig. 4) or outside of the latter, for instance by another device such as the unifying device 20 or the head-end. In this latter case, the control device will be used for taking photos and sending them to the device or the authority in charge of performing the recognition process. Parameters upon what is searched in the photo (environment, multimedia device, user's face) can be optionally joined to the photo before to be sent for its processing. After the processing, the control device 30 receives in return the information being sought, e.g. in a form of a message sent by the device or the authority in charge of the recognition process. According to a preferred embodiment, this recognition process is performed by the control device itself. In one embodiment, this recognition process performs the identification of the required information by comparing the photos (or some parts of them to identify some features comprised therein) with original data or reference corresponding data stored in a storage means (a memory or the database 35) during a preliminary initialization phase. If the recognition process does not found any match, it can ask the user to provide complementary data (via the control device), so that original data can be updated at any time by a process which is comparable to a learning process.

According to another embodiment and to enhance the recognition process, the multimedia device or its surrounding can include a specific pattern such as a graphic code which is easily detectable by the process. Such a graphical code can include information about the identification of the multimedia device so that, once detected, this graphical code can merely be read (e.g. scanned) by the digital camera and processed by the recognition unit without requiring any comparison operation. Accordingly, the identification (identifier 12) of the multimedia device 11 can be quickly obtained in an automatic and very reliable manner.

According to another embodiment, the detecting means 32 is NFC compliant (Near Field Communication) and is used to detect the identifier 12 of a multimedia device 11 compliant with NFC technology. Near field communication is a set of standards for smart phones and similar devices to establish radio communication with each other by touching them together or bringing them into close proximity, usually not more than a few centimeters. Present and anticipated applications include contactless transactions, data exchange, and simplified setup of more complex communications such as Wi-Fi. Communication is also possible between a NFC device and an unpowered NFC chip, called a "tag".

NFC standards cover communications protocols and data exchange formats, and are based on existing radio-frequency identification (RFID) standards including ISO/IEC 14443 and FeliCa. The standards include ISO/IEC 18092 and those defined by the NFC Forum, which was founded in 2004 by Nokia, Philips and Sony, and now has more than 160 members. The Forum also promotes NFC and certifies device compliance.

NFC builds upon RFID systems by allowing two-way communication between endpoints, where earlier systems such as contactless smart cards were one-way only. Since unpowered NFC "tags" can also be read by NFC devices, it is also capable of replacing earlier one-way applications.

By placing the NFC detecting means 32 close to the NFC emitter/ receiver of the multimedia unit 11, the identifier 12 (and other personal data if any) of this multimedia device can be automatically transferred to the control device 30 for identification purposes. Alternatively, other contactless communication means such as RFID tags (Radio Frequency IDentification), EPC chip (Electronic Product Code) or any other short range emitter/receiver could be used for the same purpose.

In another embodiment, the detecting means 32 is able to receive messages through a wide area network to which the control device 30 (or this detecting means) and the multimedia device 11 are connected. For instance, this wide area network can be a mobile phone network. In this case, the control device (or the detecting means) is provided with a SIM card (i.e. with a unique phone number) as well as the multimedia device 11. Accordingly, the multimedia device 11 is able to communicate at least its identifier 12 (and other credentials data if required) to the control device 30 by sending SMS via a mobile network, typically upon request from the control device. Advantageously, this communication means used a specific phone number for each multimedia device, it is invisible by other users (e.g. neighbors) contrarily to Wi-Fi networks, and it does not require a short distance between the multimedia device and the control device in order to transfer data such as the identifier 12. Moreover, through this means, there is no further need to use home network discovery protocols with the risk of having neighbor's devices appearing as well.

In variant, the wide area network could be a network supporting emails exchanges. Accordingly, the SMS and the phone numbers will be replaced respectively by short emails and electronic addresses (emails addresses).

Phone numbers or emails addresses can be regarded as being personal data of the multimedia devices. Such personal data can be stored in a storage means, for instance in the database 35, either separately from setting data 2 of multimedia devices or in the same records, e.g. next to these setting data 2. In variant, such personal data could be stored in the record which stores the reference signal 13' and the nature 14 of the multimedia content relating to each multimedia device 11.

As mentioned before, it could be useful to provide the control device 30 the ability to recognize the user 9. To this end, the control device can use the above-mentioned detecting means 32 used as sensor for gathering identification data 4 of a current user 9. By identifying the current user, among a plurality of potential known users, the control device 30 would be able to preset the relevant multimedia device 11 in accordance with a user profile 5 assigned in advance to the current user. To this aim, the control device 30 (or the device/authority in charge of the recognition process) has access to a storage means, such as a memory or the database 35, comprising profiles 5 relating to potential users of the control device. In the case where this storage means is not located within the control device 30, access can be provided through the I/O interface 31.

The sensor is not limited to a digital camera, but it can also refer to another kind of biometric sensor, such as a fingerprint sensor or a microphone 32' in view to identify the voice of the current user (through suitable recognition processes).

It should be noted that some means, such as the microphone 32' for instance, can be used both as a user interface and as detecting means to get the identifier of the multimedia device.

As already mentioned in reference to the method of the present invention, presetting the relevant multimedia device 11 can be performed in accordance to the user profile 5 which corresponds as far as possible to the identification data 4, namely without requiring a perfect match between the collected identification data 4 and those stored in the user profile 5.

Advantageously, such companion devices such as tablet computers or smart phones are already widespread and provided with all components/features to be used as control device 30, as depicted in Fig. 4. Among the main components, one can note several communication means 31 (e.g. via Wi-Fi, SIM card, Bluetooth, NFC), at least one sensor/detecting means 32 (digital cameras, microphone 32'), selecting means 34 (touch screen), storage means 35, rendering means 36 (display screen, loudspeaker 36') and processing unit 39 for running specific applications 37 and managing all the components. Besides, the control device can further comprise a security unit 38 for the same purposes as those disclosed with reference to the security unit 28 of the unifying device 20. Thus, the implementation of the present invention is also facilitated by the fact that a majority of potential users already have such a control device and already know how to use it.

In case where the control device does not merely consist of a tablet computer or a smart phone, it is nevertheless preferably provided with hardware and specific properties for rendering content (e.g. a multimedia content) in a manner similar to any of the multimedia devices. Accordingly, the control device is provided for instance with a screen for displaying image (still pictures or movies) and/or with loudspeaker for playing music. Thanks to these properties, the control device 30 is able to perform switching and/or swapping operations, as explained above with respect to the description of the method of the present invention.

In accordance to Fig. 2, each multimedia device 11 of the system of the present invention is connectable to the local area network 10 by means of a specific connection means (I/O interface and required components) and in compliance with a specific communication protocol assigned to this multimedia device. In accordance to the variant shown in Fig. 2, the unifying device 20 is used for administering the local area network 10 to which it is also connected through its I/O interface 31. Still referring to this variant, the control device 30 controls any of the multimedia devices 11, through the local area network 10 and via the unifying device 20.

Thanks to the present invention (method or system), the user has easily access to every multimedia devices 11 of his environment 1 registered in the unifying device 20. This means that it can easily control any multimedia device with a single control device 30, be means of a single application and without to perform a pairing process to link the control device with the multimedia device each time he wants to send it a command to achieve a certain task. According to the invention, the unifying device is already paired with each registered multimedia device, so that there is at any time an available link (established ready connection) between the control device and each multimedia device. Any specific login or any pairing action is therefore not required from the user (except when a new multimedia device is added to the system). Advantageously, this approach provides a smooth management of the system given that the control device is able to immediately control any multimedia device 11, in particular when the user passes from one multimedia device to another. Seamless pause, transfer and resume of multimedia content from e.g. the living room screen to the tablet computer and the bedroom screen is therefore become very easy. This solution puts all communication means through the unifying device 20 that can support multi-view and manage all storage, but also the multiscreen display in the home environment with a seamless change regardless where the content is stored, coming and viewed. The control device 30 is able to drive all displays, applications and interactions regardless of the type of display.

Besides, the control device 30 does not need to be compliant with multi pairing requirements given that it controls all the multimedia devices by means of a single generic protocol ProtG through the unifying device 20. The present invention also solves the problem of compatibility between companion device and multimedia devices from multiple manufacturers using various proprietary technologies and operating systems/middleware. In addition, while some control devices cannot be paired with more than one or two devices, the present system allows using any of these control devices for controlling all the multimedia devices located within the user environment 1. This results from the fact that the unifying device 20 can be more powerful than a small control device, since it can comprise more powerful components and mainly components providing various connecting means to cover all the required transmission technologies.

Moreover, thanks to the present invention, the control device 30 is relieved given that it communicates with a single device, namely with the unifying device. Accordingly, when the control device 30 is a companion device, the resources of the latter are saved and can be used for other purposes than controlling devices. This mainly avoids slowing down the processor speed of the companion device. Advantageously, any smart phone or computer tablet is right away usable as control device once an application to communicate with the unifying device has been installed. Moreover, owing to the screen of such companion devices, the control device is provided with a convenient and simple means to interact with a TV-set without masking part of the TV screen.

Thanks to the present invention, the multimedia devices 11 (including the control device 30 and others databases 35 or data sources 15) do not need to be connected to the same home network.

## Claims

1. Method for managing multimedia devices (11) within a local environment, each of them being connected through a specific connection means (L1, L2, L3, L4) to a unifying device (20) in accordance with a specific communication protocol (Prot1, Prot2, Prot3, Prot4), said unifying device (20) being connected to at least one data source (15), each multimedia device (11) being placed, through said unifying device (20), under control of a control device (30) by the steps of:
- providing an order (3) to said control device (30) through a user interface of the control device (30), said order (3) involving at least the designation of one of said multimedia devices (11) and at least one task to be performed by the involved multimedia device,
- converting said order (3) into a command (33) by means of a single application (37) within said control device (30), said command (33) comprising at least one identifier (12) assigned to a multimedia device (11) and at least one instruction describing said task to be performed by the involved multimedia device (11),
- sending this command (33) to the unifying device (20), said command (33) being prepared and sent in compliance with a generic communication protocol (ProtG) established between the control device (30) and the unifying device (20),
- interpreting said command (33) then sending the interpreted command (33') in accordance with the communication protocol (Prot1, Prot2, Prot3, Prot4) of the involved multimedia device (11),
- receiving then executing said interpreted command (33') by the involved multimedia device (11).

2. Method of claim 1, wherein said designation is performed automatically by obtaining the identifier (12) assigned to the involved multimedia device (11) by the control device (30), said identifier (12) being transmitted to the control device (30) in the form of an electromagnetic signal.

3. Method of claim 2, wherein said identifier (12) is obtained by processing a visual recognition of an image taken by a digital camera built in the control device (30).

4. Method of claim 2, wherein said identifier (12) is obtained by means of a near field communication signal transmitted between the control device (30) and the multimedia device (11).

5. Method of claim 2, wherein said identifier (12) is obtained by messages send by the multimedia device (11) to the control device (30) through a mobile phone network or an electronic messaging network to which at least the control device (30) and the multimedia device (11) are connected.

6. Method of any of preceding claims, wherein said task aims to switch on the multimedia device (11), to this end the control device (30) performs the following steps before sending the related command (33) to the unifying device (20):
- gathering identification data (4) of a current user (9) of the control device (30) by means of a built in sensor,
- connecting to a database (35) comprising profiles (5) relating to potential users of said control device (30), each of said profiles (5) comprising setting data referring to a specific multimedia device (11),
- selecting the profile (5) assigned to the user (9) corresponding to said identification data (4),
- including into said command (33), a second instruction for presetting the multimedia device in accordance with setting data (2), relating to said multimedia device (11), of the selected profile (5).

7. Method of any of claims 1 to 5, wherein said task aims to play a multimedia content, to this end the control device (30) is able to automatically determine the available multimedia device (11) which is most suitable to execute this task by performing the following steps:
- determining the nature (14) of said multimedia content,
- connecting the control device (30) to a database (35) referencing each multimedia device by means of at least its identifier (12) and the nature(s) (14) of multimedia content that this multimedia device (11) is able to play,
- determining if one of said multimedia devices (11) is able to play the multimedia content by comparing said nature of the multimedia content with the nature(s) (14) assigned to the multimedia devices (11) and, in case of positive outcome, charging the identified multimedia device (11) to play said multimedia content.

8. Method of claim 7, wherein the step aiming to determine the nature of the multimedia content is performed by a visual recognition of a depiction of said multimedia content by means of a digital camera (32) linked or built in the control device (30).

9. Method of any of claims 1 to 5, wherein said control device (30) is further provided with hardware and specific properties for rendering said multimedia content in a similar manner as any of said multimedia devices (11), and said command (33) sent to the unifying device (20) is for switching the multimedia content rendered on one of said multimedia devices (11) with that rendered on the control device (30) or vice-versa, or for swapping the content rendered on any of said multimedia devices (11) with that rendered on the control device (30).

10. Method of any of preceding claims, wherein at least some of said connections means (L1, L2, L3, L4) and/or at least some of said commands (33, 33') are secured and therefore involve an encryption/decryption process performed on the one hand by the unifying device (20) and on the other hand by the multimedia device (11) and/or by the control device (30).

11. Multimedia management system comprising:
- a plurality of multimedia devices (11), each of said multimedia devices (11) being connectable to a unifying device (20) by means of a specific connection means (L1, L2, L3, L4) and in compliance with a specific communication protocol (Prot1, Prot2, Prot3, Prot4),
- a unifying device (20) for administering the system,
- at least one data source (15) connectable to said unifying device (20),
- a control device (30) for controlling any of said multimedia devices (11),
- the control device (30) controls any of said multimedia devices (11) by exchanging, with the latter, commands (33, 33') or data through the unifying device (20) only, said unifying device (20) communicating with said control device (30) in accordance with a generic communication protocol (ProtG) and acting as an interpreter to convert said commands (33, 33') or data in accordance with the specific communication protocol (Prot1, Prot2, Prot3, Prot4) of said multimedia device (11) or with said generic communication protocol (ProtG), each of said commands (33) comprising at least one identifier (12) assigned to a multimedia device (11) and at least one instruction for designating a task to be performed by the multimedia device (11) corresponding to said identifier.
- said unifying device (20) being able to register each of said multimedia devices (11) by listing properties specific to each multimedia device (11), said properties including at least its connection means (L1, L2, L3, L4), its communication protocol (Prot1, Prot2, Prot3, Prot4) and rendering capabilities,
- upon request from the control device (30), said unifying device (20) being further able of connecting to said data source (15) to get a content and deliver it to at least one of said multimedia devices (11), in accordance with the properties of each multimedia device and through the relevant connection means (L1, L2, L3, L4) and the relevant communication protocol (Prot1, Prot2, Prot3, Prot4).

12. Multimedia management system of claim 11, wherein the control device (30) is provided with a detecting means (32) to automatically get said identifier (12).

13. Multimedia management system of claim 12, wherein said detecting means (32) is able to receive messages through a mobile phone network or an electronic messaging network to which the control device (30) and the multimedia device (11) are connected.

14. Multimedia management system of any of claims 11 to 13, wherein said control device (30) has further access to a database (35), comprising profiles (5) relating to potential users of said control device (30), and is provided with a sensor (32, 32') for gathering identification data (4) of a current user (9) in order to preset the multimedia device (11) in accordance to the user profile (5) corresponding as far as possible to said identification data (4).

15. Multimedia management system of any of claims 11 to 14, wherein said control device (30) is also provided with hardware and specific properties for rendering said multimedia content in a similar manner as any of said multimedia devices (11) and said control device (30) is able to switch the multimedia content rendered on any of said multimedia devices (11) with that rendered on the control device (30), or vice versa, or to swap its multimedia content with that rendered on any of said multimedia devices (11) by sending a relating command (33) to the unifying device (20).
